Europäisches Patentamt

European Patent Office

Office européen des brevets

(19)

(11) Veröffentlichungsnummer : **0 193 860**
B1

(12) **EUROPÄISCHE PATENTSCHRIFT**

(45) Veröffentlichungstag der Patentschrift :
11.10.89

(51) Int. Cl.⁴ : **G 01 S 17/10**, G 01 S 17/42

(21) Anmeldenummer : 86102492.5

(22) Anmeldetag : 26.02.86

(54) **Verfahren und Schaltungsanordnung zum Messen von Abstandspunkten von einem gemeinsamen Bezugspunkt aus.**

(30) Priorität : 02.03.85 DE 3507401

(43) Veröffentlichungstag der Anmeldung :
10.09.86 Patentblatt 86/37

(45) Bekanntmachung des Hinweises auf die Patenterteilung : 11.10.89 Patentblatt 89/41

(84) Benannte Vertragsstaaten :
DE FR GB IT SE

(56) Entgegenhaltungen :
DE--A-- 2 325 086
DE--A-- 3 415 043
FR--A-- 2 485 749

(73) Patentinhaber : ELTRO GmbH Gesellschaft für
Strahlungstechnik
Kurpfalzring 106 Postfach 10 21 20
D-6900 Heidelberg 1 (DE)

(72) Erfinder : Strauss, Manfred
Klingenhüttenweg 7a
D-6900 Heidelberg (DE)

(74) Vertreter : Muschka, Wilhelm, Dipl.-Ing.
Eltro GmbH Gesellschaft für Strahlungstechnik Kurpfalzring 106 Postfach 10 21 20
D-6900 Heidelberg 1 (DE)

EP 0 193 860 B1

Jouve, 18, rue St-Denis, 75001 Paris, France

## Beschreibung

Die Erfindung bezieht sich auf ein Verfahren sowie eine Vorrichtung, das bzw. die es ermöglichen, durch Erzeugung von Triggersignalen Abstandspunkte von einem gemeinsamen Bezugspunkt aus zu messen.

In dem nicht vorveröffentlichten Dokument DE-PS 34 15 043 sind ein Verfahren und eine Schaltungsanordnung zum entfernungs- und winkelunabhängigen Messen gleicher Abstandspunkte von einem gemeinsamen Bezugspunkt aus behandelt. Ein Schwingsystem tastet hierbei die interessierenden Objektflächen ab. Die Abtastfunktion u wird in eine proportionale Wechselspannung umgewandelt und in Relation zu einer in einzelne Schritte unterteilten Referenzspannung $u_{Ref}$ gesetzt. Ein Über- oder Unterschreiten der Referenzspannung durch die Wechselspannung erzeugt ein Triggersignal, das die Referenzspannungsschritte weiterschaltet und gleichzeitig Meßvorgänge in voneinander äquidistanten Abschnitten $\Delta y$ auslöst.

Der Erfindung liegt die Aufgabe zugrunde, mit Hilfe eines sinusförmig abtastenden Schwingsystems Triggersignale bei vordefinierten Winkelbeziehungen dieses Schwingsystems auszulösen. Diese Aufgabe wird erfindungsgemäß durch die im Anspruch 1 bzw. im Anspruch 4 genannten Merkmale gelöst. Vorteilhaft ist hierbei, daß trotz variabler Schwingfrequenzen, die von Fertigungstoleranzen, Alterungserscheinungen und dgl. abhängen, stets feste Winkelbeziehungen erhalten bleiben. Was sich ändert, sind lediglich die zeitlichen Abstände zwischen den Impulsen, und zwar entsprechend der Schwingfrequenz. Dieses Verfahren läßt sich vergleichsweise einfach realisieren, weil man lediglich eine bestimmte Anzahl von Impulsen zeitlich linear über einen Sinus verteilen und anschließend die Pulszahl bestimmen muß, bei welcher das entsprechende Winkelelement durchläuft. Damit sind praktisch alle Größen zur Berechnung des gewünschten Triggerzeitpunktes gegeben.

Vorteilhafte Weiterbildungen der Erfindung sind Gegenstand der Unteransprüche.

Im folgenden wird an Hand einer Zeichnung ein Ausführungsbeispiel der Erfindung erläutert, wobei die in den einzelnen Figuren einander entsprechenden Teile dieselben Bezugszeichen aufweisen. Es zeigt

Fig. 1 die Sinuskurve $\beta_n$ des abtastenden Schwingsystems mit den einzelnen für den Meßvorgang benötigten Winkelpositionen bzw. den Zusammenhang derselben mit dem Triggerzeitpunkt $t_n$,

Fig. 2 eine Prinzipskizze über den Hergang des erfindungsgemäßen Meßverfahrens,

Fig. 3 die in äquidistante Zeitabschnitte $\Delta t$ unterteilte Zeitachse der Sinuskurve $\beta_n$ gemäß Fig. 1 und

Fig. 4 das Blockschaltbild des erfindungsgemäßen Meßverfahrens.

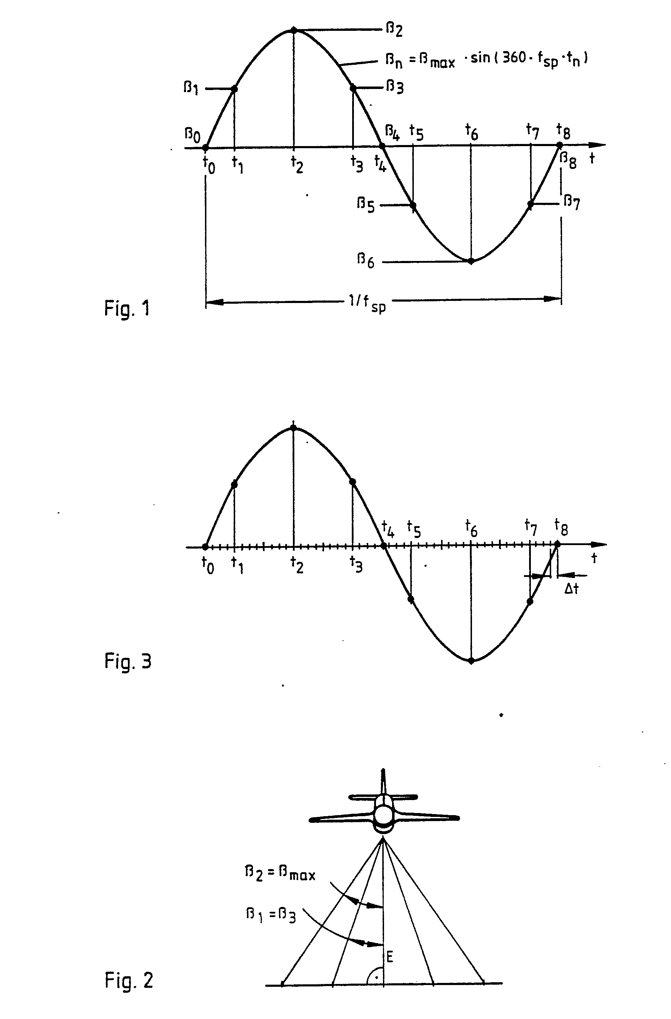

Das zeichnerisch nicht näher dargestellte Schwingsystem, z. B. ein Spiegel oder Prisma, der bzw. das gemäß Fig. 3 in einem Flugzeug installiert ist, schwingt sinusförmig, wie in Fig. 1 veranschaulicht. Seine maximale Winkelauslenkung $\beta_{max}$ ist hierbei konstant, während sich seine Schwingfrequenz $f_{sp}$ ändern kann. Bei derlei schwingenden Systemen läßt sich die Winkelposition oder Elongation $\beta_n$ aus der von der Mittellage bis zur momentanen Winkelposition $\beta_n$ verflossenen Zeit $t_n$ sowie der Schwingfrequenz $f_{sp}$ errechnen aus

$$\beta_n = \beta_{max} \cdot \sin (360 \cdot f_{sp} \cdot t_n) \tag{I}$$

Der maximale Schwingwinkel $\beta_{max}$ ist hierbei der sich aus der Mittellage und dem Umkehrpunkt ergebende Winkel.

Es soll nun der Zeitpunkt $t_n$ ermittelt werden, bei dem der Winkel $\beta_n$ erreicht wird, und der bestimmend ist für die Auslösung eines Triggersignals. Hierfür unterteilt man die Zeitachse $t_0$ bis $t_8$ in diskrete und — der Anschaulichkeit wegen — äquidistante Zeitabschnitte $\Delta t$, wobei es zu berücksichtigen gilt, daß im Umkehrbereich, also zu den Zeitpunkten $t_0$, $t_4$ und $t_8$ jeweils das halbe Zeitintervall vor und das andere halbe nach der Richtungsumkehr liegen. Bei einer solchermaßen unterteilten Zeitachse fällt der jeweilige Triggerzeitpunkt $t_n$ in einen der diskreten Zeitabschnitte $\Delta t$ gemäß Fig. 3. Um den Triggerfehler möglichst gering zu halten, muß die Länge dieser Zeitabschnitte $\Delta t$ entsprechend dem zulässigen Winkelfehler gewählt werden. Um den Triggerzeitpunkt $t_n$ festzulegen, fehlt jetzt noch die Anzahl $A_n$ der Zeitabschnitte $\Delta t$ vom Zeitpunkt $t_0$ bis zu diesem Triggerzeitpunkt $t_n$. Diese Anzahl $A_n$ erhält man durch Auszählen; mit dem Zeitabschnitt t multipliziert, führt dies zum gesuchten Triggerzeitpunkt $t_n$, sofern der Zeitpunkt $t_0$ der Start für die Bestimmung der Winkelposition $\beta_n$ war.

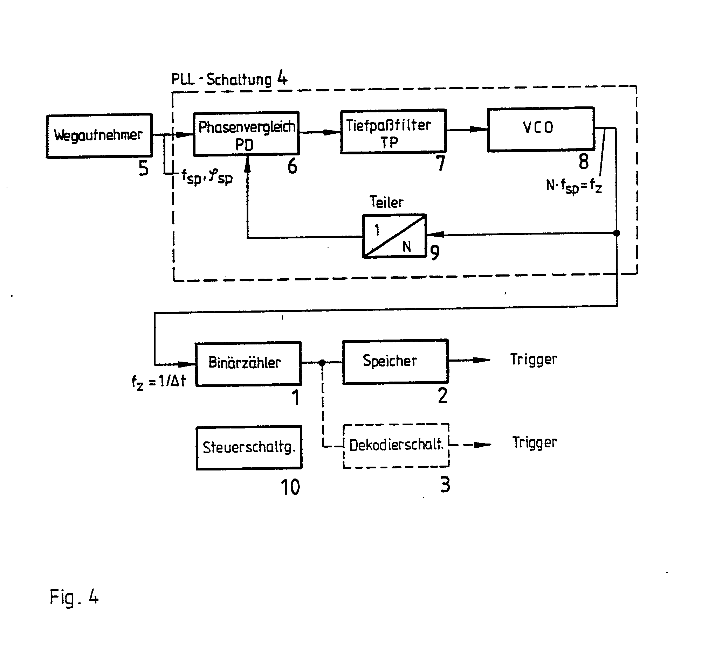

Die schaltungsmäßige Realisation geht aus Fig. 4 hervor: Der Digitalzähler 1, vorzugsweise ein Binärzähler, wird mit einer Impulsfolge angesteuert, deren Taktfolge der Zeit des diskreten Zeitabschnitts $\Delta t$ entspricht. Er beginnt seinen Zählvorgang zum Zeitpunkt $t_0$, so daß beim Erreichen der Anzahl $A_n$ der Zeitpunkt $t_n$ bzw. die Winkelposition $\beta_n$ erreicht wird. Die Ausgänge des Binärzählers 1 werden alternativ an die Adreßeingänge des Speichers 2 oder an die Eingänge der mit unterbrochener Linienführung dargestellten Dekodierschaltung 3 angelegt. Speicher und Dekodierschaltung obliegt jetzt die Aufgabe, solange die Anzahl $A_n$ an ihren Eingängen anliegt, den entsprechenden Ausgang zu markieren. Dies kann z. B. dadurch erfolgen, daß der betreffende Ausgang auf « logisch 1 » gehalten wird. Der so markierte Ausgang löst dann das Triggersignal aus. Dieser — in Blickrichtung — untere Schaltungsteil arbeitet erwartungsgemäß nur bei konstanter Schwingfrequenz $f_{sp}$ des Systems.

Wie Gleichung I zu erkennen gibt, wird der Triggerzeitpunkt $t_n$ bei geänderter Schwingfrequenz in reziprokem Verhältnis zur Schwingfrequenzänderung geändert, um wieder die gleiche Winkelposition $\beta_n$ zu erreichen.

Dem Binärzähler 1 muß daher noch eine digitale Frequenznachlaufsteuerung 4, handelsüblich unter der Bezeichnung phase locked loop (= PLL) erhältlich, vorgeschaltet werden. Ihre Daten, nämlich die Schwingfrequenz $f_{sp}$ und den Phasenwinkel $\varphi_{sp}$, erhält sie über den Wegaufnehmer 5. Die Frequenznachlaufsteuerung 4 als solche besteht aus einer Reihenschaltung des Phasenvergleichers 6, des Tiefpaßfilters 7 und der Stufe 8 — dem Voltage Controlled Oszillator (VCO) —, die der Erhöhung der Schwingfrequenz $f_{sp}$ um den Teilerfaktor N dient. Am Ausgang der letztgenannten Stufe erhält man sodann die phasenstarre und um den Teilerfaktor N erhöhte Schwingfrequenz $f_{sp}$ als Zählfrequenz $f_z$ zu

$$f_z = N \cdot f_{sp} \tag{II}$$

Diese Zählfrequenz gelangt einmal über den Teiler 9 an den Phasenvergleicher 6 und zum anderen gelangt sie an den Eingang des Binärzählers 1. Der Teiler 9 teilt hierbei die Zählfrequenz um den Faktor N.

Ferner gelten noch folgende einleitend bereits erläuterte Beziehungen :

$$t_n = A_n \cdot \Delta t \tag{III}$$

$$\Delta t = 1/f_z \tag{IV}$$

Dies vorausgesetzt, läßt sich Gleichung I auch umformen zu :

$$\beta_n = \beta_{max} \cdot \sin (360/N \cdot A_n) \tag{V}$$

Dieser Gleichung V ist zu entnehmen, daß die Winkelposition $\beta_n$ nur noch von der Anzahl $A_n$ der Zeitabschnitte $\Delta t$ abhängt, da alle anderen Werte als konstant angeommen werden können.

Schließlich ist auch noch eine Steuerschaltung 10 vorhanden, die den Ablauf der einzelnen Funktionen steuert und z. B. auch den Binärzähler 1 jeweils wieder auf Null setzt.

## Patentansprüche

1. Verfahren zur Erzeugung von Triggersignalen jeweils zu Zeitpunkten $t_0$ bis $t_n$, welche vorgegebenen Winkelstellungen eines Scannerelements entsprechen, das eine sinusförmige mechanische Schwingung konstanter Amplitude $\beta_{max}$ um eine gegebene Drehachse ausführt, bei dem

a) ein Taktsignal mit einer Frequenz erzeugt wird, die wesentlich größer als die Schwingfrequenz des Scannerelements ist,

b) das Verhältnis der Frequenzen des Taktsignals und des Scannerelements durch Regelung der Taktfrequenz in Abhängigkeit von der Schwingfrequenz konstant gehalten wird,

c) die Signaltakte des Taktsignals während jeder Schwingung des Scannerelements gezählt werden, und

d) ein Triggersignal jeweils bei den Zählwerten ausgelöst wird, die einem der Zeitpunkt $t_0$ bis $t_n$ entsprechen.

2. Verfahren nach Anspruch 1, bei dem die Signaltakte binär gezählt werden.

3. Verfahren nach Anspruch 1 oder 2, bei dem die Frequenz des Taktsignals nach Maßgabe des zulässigen Winkelfehlers gewählt wird.

4. Schaltungsanordnung zur Durchführung des Verfahrens nach einem der vorhergehenden Ansprüche mit

— einem Wegaufnehmer (5) zur Erzeugung eines Wechselsignals, das die sinusförmige mechanische Schwingung Konstanter Amplitude eines mit dem Wegaufnehmer gekoppelten Scannerelements um eine gegebene Drehachse repräsentiert,

— einem Binärzähler (1),

— einer Taktsignalquelle (8), welche ein Taktsignal mit einer im Vergleich zur Schwingfrequenz des Scannerelements wesentlich höheren Frequenz aufweist, das dem Binärzähler zugeführt wird,

— Mitteln (6, 7, 9) zur Konstanthaltung der Verhältnisses der Frequenzen des Taktsignals und des Wechselsignals durch Regelung der Frequenz des Taktsignals in Abhängigkeit von der Frequenz des Wechselsignals,

— einem Schaltkreis (2 ; 3) zur Erkennung von ausgewählten, jeweils vorgegebenen Winkelstellungen des Scannerelements entsprechenden Zählerständen des Binärzählers, welcher einen mit dem Zählerstand adressierten Speicher (2) oder eine an den Zähler angeschlossene Dekodierschaltung (3) umfaßt, durch die bei Auftreten eines der ausgewählten Zählerstände jeweils ein diesen Zählerständen zugeordnetes Triggersignal ausgelöst wird,

— einer Steuerschaltung (10) zur Synchronisation des Betriebs der einzelnen Einrichtungen mit der Schwingung des Scannerelements.

5. Schaltungsanordnung nach Anspruch 4, bei der die Mittel zur Konstanthaltung einen Phasenvergleicher (6) zum Vergleich der Phasen des Wechselsignals und des Taktsignals, weiter ein zwischen dem Phasenvergleicher und einem Frequenzsteuereingang der Taktimpulsquelle angeordnetes Tiefpaßfilter (7) und eine Teilerstufe (9) umfassen, die einen dem konstanten Verhältnis entsprechenden Teilerfaktor aufweist und über die das Taksignal dem Phasenvergleicher zugeführt ist.

6. Schaltungsanordnung nach einem der vorhergehenden Ansprüche, bei der der Speicher (2) oder die Dekodierschaltung (3) für jedes Triggersignal jeweils einen eigenen Ausgang aufweisen.

## Claims

1. A process for producing trigger signals at respective points in time $t_0$ to $t_n$, which correspond to predetermined angular positions of a scanning element, which executes a sinusoidal mechanical oscillation of constant amplitude $\beta_{max}$ about a given axis of rotation, in which

a) a clock signal is produced with a frequency which is substantially greater than the oscillation frequency of the scanning element,

b) the ratio of the frequencies of the clock signal and the scanning element is maintained constant by control of the clock frequency in dependence on the oscillation frequency,

c) the periods of the clock signal are counted during each oscillation of the scanning element, and

d) a trigger signal is released whenever the count value corresponds to one of the points in time $t_0$ to $t_n$.

2. A process according to claim 1, in which the periods are binary counted.

3. A process according to claim 1 or 2, in which the frequency of the clock signal is selected according to the magnitude of the permitted angular error.

4. Circuit arrangement for carrying out the process of any one of the preceding claims comprising

— a displacement pick up (5) for producing an alternating signal, which represents the sinusoidal mechanical oscillation of constant amplitude about a given axis of rotation of a scanning element coupled to the displacement pick up,

— a binary counter (1),

— a clock signal source (8), which produces a clock signal with a frequency substantially greater in comparison to the oscillation frequency of the scanning element, which clock signal is supplied to the binary counter,

— means (6, 7, 9) for maintaining the ratio of the frequencies of the clock signal and the alternating signal constant by controlling the frequency of the clock signal in dependence on the frequency of the alternating signal,

— a circuit (2 ; 3) for recognition of selected count values of the binary counter which correspond to predetermined angular positions of the scanning element, which circuit comprises a memory (2) addressed by the count value or a decoder circuit (3) connected to the counter, by means of which, on the occurrence of one of the selected count values, a trigger signal corresponding to that count value is released,

— a control circuit (10) for synchronisation of the operation of the individual components with the oscillation or the scanning element.

5. Circuit arrangement according to claim 4, in which the means for maintaining constant comprises a phase comparator (6) for comparing the phase of the alternating signal and the clock signal, a low pass filter (7) connected between the phase comparator and a frequency control input of the clock signal source, and a divider stage (9), which has a division factor corresponding to the constant ratio, and through which the clock signal is supplied to the phase comparator.

6. Circuit arrangement according to any one of the preceding claims, in which the memory (2) or the decoder circuit (3) has an individual output for each respective trigger signal.

## Revendications

1. Procédé de génération de signaux de déclenchement à des instants $t_0$ à $t_n$ qui correspondent à des positions angulaires données d'un élément de balayage, qui effectue une oscillation mécanique sinusoïdale d'amplitude constante $\beta_{max}$, autour d'un axe de rotation donné, dans lequel :

a) un signal d'impulsions est produit avec une fréquence qui est bien supérieure à la fréquence d'oscillations de l'élément de balayage,

b) le rapport des fréquences du signal d'impulsions et de l'élément de balayage est maintenu constant par réglage de la fréquence d'impulsions en fonction de la fréquence d'oscillations,

c) les impulsions du signal d'impulsions sont comptées pendant chaque oscillation de l'élément de balayage, et

d) un signal de déclenchement est généré pour les valeurs de comptage qui correspondent à l'un des instants $t_0$ à $t_n$.

2. Procédé selon la revendication 1, dans lequel les impulsions de signal sont comptées de façon binaire.

3. Procédé selon la revendication 1 ou 2, dans lequel la fréquence du signal d'impulsions est choisie en fonction de l'erreur angulaire admissible.

4. Montage pour la mise en œuvre du procédé selon l'une des revendications précédentes comportant :

— un détecteur de déplacement (5) destiné à produire un signal alternatif qui représente l'oscillation mécanique sinusoïdale d'amplitude constante d'un élément de balayage, accouplé au détecteur de déplacement, autour d'un axe de rotation donné,

— un compteur binaire (1),

— une source de signaux d'impulsions (8) qui présente un signal d'impulsions de fréquence beaucoup plus élevée que la fréquence d'oscillations de l'élément de balayage, et qui est envoyé au compteur binaire, .

— des moyens (6, 7, 9) destinés à maintenir constant le rapport des fréquences du signal d'impulsions et du signal alternatif, par réglage de la fréquence du signal d'impulsions en fonction de la fréquence du signal alternatif,

— un circuit (2 ; 3) permettant de détecter des positions de comptage choisies du compteur binaire, correspondant à chaque fois à des positions angulaires données de l'élément de balayage, qui comporte une mémoire (2) adressée avec la position du compteur, ou un circuit de décodage (3) relié au compteur, lequel engendre, lorsque apparaît l'une des positions de compteur choisies, un signal de déclenchement associé à cette position de comptage,

— un circuit de commande (10) pour la synchronisation du fonctionnement des différents dispositifs avec l'oscillation de l'élément de balayage.

5. Montage selon la revendication 4, dans lequel les moyens de maintien de la constance, comportent un comparateur de phase (6) permettant de comparer les phases du signal alternatif et du signal d'impulsions, un filtre passe-bas (7) placé entre le comparateur de phase et une entrée de commande de fréquence de la source d'impulsions, et un étage diviseur (9) qui comporte un facteur de division correspondant au rapport constant, et par lequel le signal d'impulsions est acheminé vers le comparateur de phase. .

6. Montage selon l'une des revendications précédentes, dans lequel la mémoire (2) ou le circuit de décodage (3) comporte sa propre sortie pour chaque signal de déclenchement.

Fig. 1

$\beta_n = \beta_{max} \cdot \sin(360 \cdot f_{sp} \cdot t_n)$

Fig. 3

Fig. 2

$\beta_2 = \beta_{max}$

$\beta_1 = \beta_3$

1

PLL - Schaltung 4

| Wegaufnehmer 5 | Phasenvergleich PD 6 | Tiefpaßfilter TP 7 | VCO 8 |

$f_{sp}, \varphi_{sp}$

$N \cdot f_{sp} = f_z$

Teiler
1 / N  9

$f_z = 1/\Delta t$

| Binärzähler 1 | Speicher 2 | → Trigger |

| Steuerschaltg. 10 | Dekodierschalt. 3 | --→ Trigger |

Fig. 4

2